# FASCICULE DE BREVET EUROPEEN

(11) **EP 1 960 223 B1**
(45) Date de publication et mention de la délivrance du brevet: **30.03.2011**
(21) Numéro de dépôt: 06808304.7
(22) Date de dépôt: 11.09.2006
(51) Int. Cl.: B60K 6/442, B60K 6/485, B60K 6/24, B60K 6/26

(54) **CHAINE DE TRACTION HYBRIDE ET VEHICULE HYBRIDE EQUIPE D'UNE TELLE CHAINE DE TRACTION HYBRIDE**
HYBRIDANTRIEBSZUG UND HYBRIDFAHRZEUG DAMIT
HYBRID DRIVE TRAIN AND HYBRID VEHICLE EQUIPPED WITH SAME

(30) Priorité: 15.09.2005 FR 0552776
(43) Date de publication de la demande: 27.08.2008
(73) Titulaire: PEUGEOT CITROËN AUTOMOBILES SA, 78140 Vélizy Villacoublay (FR)
(72) Inventeur: NOIRET, Christian, F-78230 Le Pecq (FR)
(86) Numéro de dépôt international: PCT/FR2006/050866
(87) Numéro de publication internationale: WO 2007/031676

(56) Documents cités:
- EP-A- 1 354 744
- WO-A-2005/007440
- DE-A1- 10 040 354
- DE-C1- 10 201 601
- US-A1- 2003 051 679
- US-A1- 2003 094 322
- PATENT ABSTRACTS OF JAPAN vol. 017, no. 358 (M-1440), 7 juillet 1993 (1993-07-07) -& JP 05 050865 A (AISIN AW CO LTD), 2 mars 1993 (1993-03-02)

## Description

L'invention concerne le domaine des véhicules et notamment une chaîne de traction hybride équipant les véhicules automobiles.

L'invention concerne également un procédé de gestion d'une chaîne de traction hybride et un véhicule hybride équipé d'une telle chaîne de traction hybride.

### ARRIERE-PLAN DE L'INVENTION

Les contraintes d'implantation des groupes motopropulseurs dans les véhicules sont de plus en plus sévères du fait du nombre croissant d'accessoires (direction assistée, climatisation, ..), des normes de chocs (frontal, piéton, ...) et de dépollution (catalyseur, filtre anti-particules, ...) ou encore les alterno-démarreurs assurant une fonction « stop and start »,

L'intérêt de la traction automobile hybride combinant une propulsion thermique et une propulsion électrique, est réel pour réduire les consommations mais aussi pour réduire les émissions de gaz polluant (émission de CO2).

Pour réaliser une chaîne de traction hybride, il faut implanter dans le compartiment moteur, en plus des organes côtoyant habituellement le moteur thermique, au moins deux machines électriques dédiées pour pouvoir disposer de suffisamment de puissance électrique et répondre aux besoins en énergie de la chaîne de traction hybride dans toutes les situations de fonctionnement du véhicule (conditions de roulage) dans lesquels les machines électriques doivent suppléer le moteur thermique et/ou récupérer de l'énergie.

A titre d'exemple, on peut lister les besoins suivants :
- besoin d'un organe de démarrage "haute puissance" du moteur thermique (pour un temps de démarrage très court sans vibration)
- besoin de pouvoir recharger la batterie BAT pendant le fonctionnement en traction électrique à très faible vitesse ou à l'arrêt ;
- besoin d'assurer la récupération d'énergie lors du freinage du véhicule, également appelé freinage "récupératif" ;
- besoin d'améliorer la prestation véhicule en utilisant la fonction d'assistance à la traction du véhicule, appelée également fonction "boost", qui offre un potentiel de prestation dynamique du véhicule ;
- besoin d'une transmission optimisant dynamiquement le meilleur point de fonctionnement moteur ;
- ...

Certains constructeurs automobiles satisfont partiellement à ces besoins et proposent notamment des chaînes de traction hybrides basées sur des organes de transmission permettant une transmission infiniment variable, également désignée par les abréviations anglo-saxonnes "IVT" (Infinitely Variable Transmission), c'est-à-dire un organe de transmission permettant de réaliser tous les rapports de transmission dans un intervalle de temps réduit déterminé pour être compatible avec la demande d'accélération du conducteur. Ces organes de transmission sont constitués principalement d'au moins un train épicycloïdal et d'au moins deux machines électriques.

On distingue plusieurs types d'architecture de chaîne de traction hybride : une chaîne de traction hybride dite "série", une chaîne de traction hybride dite "parallèle" et une chaîne de traction dite "série/parallèle" (ou à dérivation de puissance).

Cette dernière architecture à dérivation de puissance, met en oeuvre un train épicycloïdal couplé au différentiel et donc aux roues du véhicule au moyen d'un réducteur de vitesse. Cette architecture permet une transmission infiniment variable (IVT) et ne nécessitant pas d'embrayage.

On retrouve ce type d'architecture notamment décrit dans le document WO2005/007440.

L'inconvénient de cette solution est que le rendement n'est pas toujours optimal du fait de la dérivation de puissance électrique nécessaire à son fonctionnement. En effet, la puissance électrique nécessaire qui peut atteindre jusqu'à 30% de la puissance moteur, est dérivée (ou re-circule) à travers les deux machines électriques et une électronique de puissance. Ceci crée donc une perte de rendement : le rendement global étant le produit des trois rendements électriques.

D'autre part, une telle architecture nécessite de revoir complètement l'outil industriel.

Un autre inconvénient est que bien que répondant aux besoins hybrides, le nombre de machines électriques à embarquer dans le véhicule, (en plus de celles dédiées pour la traction hybride et le freinage récupératif) devient vite prohibitif pour pouvoir alimenter l'IVT.

Une autre solution consiste à intercaler une machine électrique entre le moteur thermique et la boîte de vitesses ; la transition de couple étant assurée par embrayage.

L'inconvénient de cette autre solution est que, d'une part, elle augmente la longueur du groupe motopropulseur et que, d'autre part, la position de la machine électrique en entrée de boîte, limite le potentiel de fonctionnement hybride. En outre, cette solution ne permet pas de disposer de fortes puissances au démarrage du véhicule, ni de recharge de la batterie à l'arrêt du véhicule sans pénaliser le temps de démarrage ou encore la recharge efficace à très faible vitesse. Pour pouvoir disposer d'une telle puissance, il faudrait rajouter un système de démarrage de type "Stop and Start" qui d'une part reste limité en puissance et qui d'autre part, génère un encombrement supplémentaire du fait de la largeur de la courroie de l'alterno-démarreur. La prestation souhaitée en ce qui concerne le temps de démarrage, l'acoustique et les vibrations reste donc limitée.

Par ailleurs, la fonction de freinage récupératif électrique est délicate à gérer puisqu'il ne faut pas qu'il y ait de changement de rapport au même moment sous peine de rupture de couple pendant la décélération. En effet, pour récupérer le maximum d'énergie au freinage, il faut limiter les pertes de charge dans le moteur thermique et donc changer de démultiplication pour faire chuter au maximum le régime moteur.

On connaît également du document JP05 050865 une chaîne de traction hybride conforme au préambule de la revendication 1.

Là encore, une telle architecture nécessite de revoir complètement l'outil industriel.

### OBJET DE L'INVENTION

L'invention a pour objet une chaîne de traction hybride permettant de mieux répondre aux besoins listés ci-dessus tout en palliant notamment les inconvénients précités. Elle a pour autres objets, un procédé de gestion de la chaîne de traction hybride en fonction des conditions de roulage du véhicule et un véhicule équipé d'une telle chaîne de traction hybride.

L'invention offre comme principal avantage de satisfaire pleinement au cahier des charges d'une chaîne de traction hybride tout en proposant une architecture compacte dont l'agencement des différents organes est optimisé pour tenir dans un encombrement équivalent à celui d'une chaîne de traction standard optimisant en outre l'espace disponible sous le capot moteur du véhicule.

Un autre avantage de la présente invention est qu'elle ne nécessite pas de développement industriel spécifique. Enfin, avec le procédé de gestion selon l'invention, la chaîne de traction hybride s'adapte à toutes les conditions de roulage du véhicule sans dégrader les rendements thermique et/ou électrique mis en jeu.

### BREVE DESCRIPTION DE L'INVENTION

L'invention propose une chaîne de traction hybride conforme à la partie caractérisante de l'objet de la revendication 1.

Selon une caractéristique, au moins une deuxième machine électrique est un démarreur ou un alternateur ou un alterno-démarreur.

L'invention a pour autre objet un procédé de gestion d'une chaîne de traction hybride telle que décrite ci-dessus, caractérisé en ce qu'il consiste à commander le moteur thermique, la première machine électrique, la au moins deuxième machine électrique et la batterie pour adapter leur fonctionnement en fonction des conditions de roulage du véhicule.

Selon une caractéristique du procédé, le véhicule étant à l'arrêt, et si le niveau de charge de la batterie est inférieur à un niveau de charge déterminé ou si le régime du moteur thermique est inférieur à un régime déterminé, il consiste à commander le moteur thermique pour recharger la batterie via la au moins deuxième machine électrique.

Selon une autre caractéristique, le véhicule étant en vitesse stabilisée et si la vitesse est inférieure à une vitesse déterminée, il consiste à commander la première machine électrique pour mettre le véhicule en roulage via l'organe de transmission jusqu'à obtention d'un niveau minimal déterminé de charge de la batterie puis, le niveau de charge minimal étant atteint, il consiste à commander le moteur thermique qui est utilisé à la fois pour faire avancer le véhicule et pour recharger la batterie, et en ce qu'il consiste, si la vitesse augmente au-dessus d'une vitesse déterminée, à désactiver la première machine électrique pour ne conserver que la traction thermique pure seulement due au moteur thermique.

Selon une autre caractéristique, le véhicule étant en accélération inférieure à un seuil déterminé et pour un niveau de charge de la batterie déterminé et à un niveau de puissance demandé à la roue déterminé, il consiste :
- dans une première phase de traction électrique pure, à commander seulement l'alimentation de la première machine électrique par la batterie ; la première machine assurant seule l'avancement du véhicule ;
- dans une deuxième phase, toujours de traction électrique pure, dans laquelle la première machine électrique assure toujours l'avancement du véhicule, à commander en outre l'alimentation de la au moins deuxième machine électrique par la batterie pour le démarrage du moteur thermique ; et
- dans une troisième phase de traction thermique pure, à commander le moteur thermique pour qu'il prenne le relais de la première machine électrique ; le moteur thermique assurant alors à lui seul la traction du véhicule via l'organe de transmission.

Selon la caractéristique précédente, dans la troisième phase de traction thermique pure, il consiste en outre à commander le moteur thermique pour recharger la batterie.

Selon une autre caractéristique, le véhicule étant en accélération supérieure à un seuil déterminé, il consiste à commander conjointement, le moteur thermique, les première et la au moins deuxième machines électriques et la batterie pour consacrer toute la puissance disponible à l'accélération du véhicule.

Selon une autre caractéristique, le véhicule étant en accélération intermédiaire, c'est-à-dire une accélération comprise entre une accélération inférieure à premier un seuil déterminé et une accélération supérieure à un deuxième seuil déterminé, il consiste à commander seulement une ou l'autre des première et la au moins deuxièmes machines électriques.

Selon une autre caractéristique, le véhicule étant en décélération inférieure à un seuil déterminée, il consiste à commander uniquement la première machine électrique de manière à assurer un freinage récupératif.

Selon une autre caractéristique, le véhicule étant en décélération supérieure à seuil déterminé et l'organe de transmission comportant une transmission continûment variable, il consiste à commander la première machine électrique connectée aux roues et la au moins deuxième machine électrique intégrée au vilebrequin, de manière à participer au freinage des roues, avec la première machine électrique, via l'organe de transmission.

Selon une autre caractéristique du procédé qui peut être combinée à l'une ou l'autre des caractéristiques décrites ci-dessus, l'organe de transmission comportant une boite de vitesses manuelle pilotée, il consiste à commander la première machine électrique connectée aux roues pour prendre le relais du moteur thermique pendant les phases de changement de rapport afin de réduire la rupture de couple à la roue.

Enfin selon une autre caractéristique, le véhicule étant en décélération supérieure à seuil déterminé et l'organe de transmission comportant une transmission continûment variable, il consiste à commander la première machine électrique connectée aux roues et la au moins deuxième machine électrique intégrée au vilebrequin, de manière à participer au freinage des roues, avec la première machine électrique, via l'organe de transmission.

L'invention a également pour objet un véhicule équipé d'une chaîne de traction hybride conforme à la description donnée ci-dessus et mettant en oeuvre le procédé décrit ci-dessus.

Ainsi, la deuxième machine électrique disposée sur le vilebrequin permet d'assurer avantageusement les fonctions de démarrage réclamant une forte énergie de l'ordre de plusieurs KW, la recharge de la batterie véhicule arrêté ou en mouvement.

De même, la coopération entre les première et deuxième machines électriques, respectivement connectée aux roues et intégrée au moteur thermique, permet d'assurer la fonction "boost" à la traction thermique pour les performances dynamiques du véhicule ainsi que le freinage récupératif. Dans ce cas, une transmission de type CVT est nécessaire pour pouvoir utiliser la machine électrique intégrée au moteur thermique.

L'utilisation d'une telle transmission permet en outre d'optimiser en continu le rendement du moteur thermique.

Enfin, également de façon avantageuse, les machines électriques sont disposées dans des zones habituellement vide et leur implantation ne nécessite que peu de modifications dans le compartiment moteur.

### BREVE DESCRIPTION DES DESSINS

D'autres caractéristiques et avantages de la présente invention apparaîtront plus clairement à la lecture de la description suivante de modes de réalisation non limitatifs de celle-ci, en se rapportant aux dessins annexés, sur lesquels :
- la figure 1 illustre une vue de dessus d'une chaîne de traction hybride comportant une première machine électrique et une pluralité de deuxièmes machines électriques selon l'invention, implantées dans le compartiment moteur d'un véhicule automobile ;
- la figure 2 illustre schématiquement un mode de réalisation de la première machine d'une chaîne de traction hybride selon l'invention ;
- la figure 3 représente, de façon partielle, un exemple de réalisation d'un moteur thermique équipé d'une deuxième machine électrique dans une chaîne de traction hybride selon l'invention, vu selon l'axe longitudinal du vilebrequin de ce moteur ;
- la figure 4 est une vue en coupe selon l'axe IV - IV de la figure 3 ;
- les figures 5 à 13, illustrent respectivement et schématiquement les différentes étapes du procédé de commande d'une chaîne de traction hybride selon l'invention en fonction de l'état de roulage du véhicule, dans lesquelles :

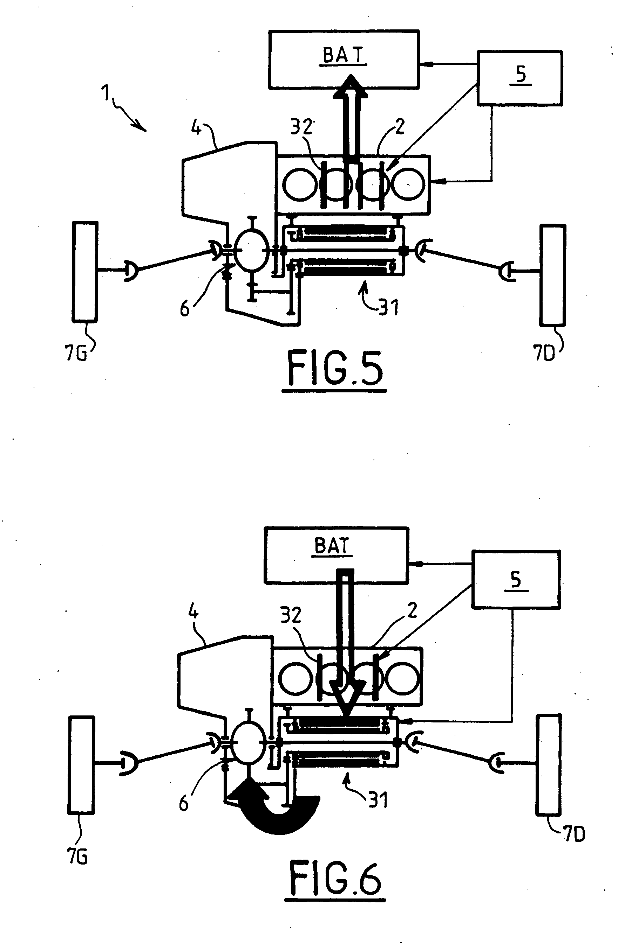

- la figure 5 illustre une première étape dans laquelle le véhicule est à l'arrêt ;

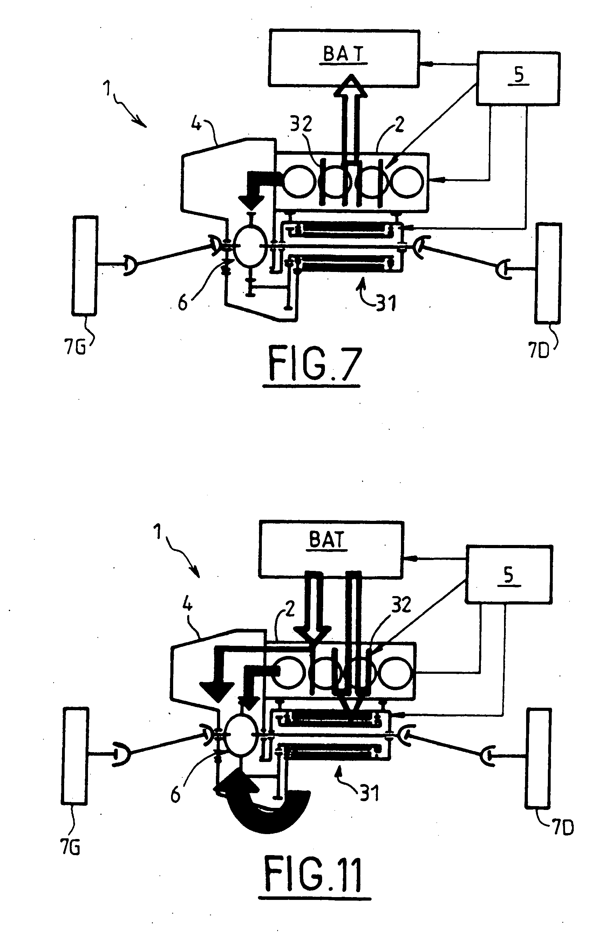

- les figures 6 et 7 illustrent respectivement des première et deuxième phases de fonctionnement selon l'invention, le véhicule étant à vitesse stabilisée ;

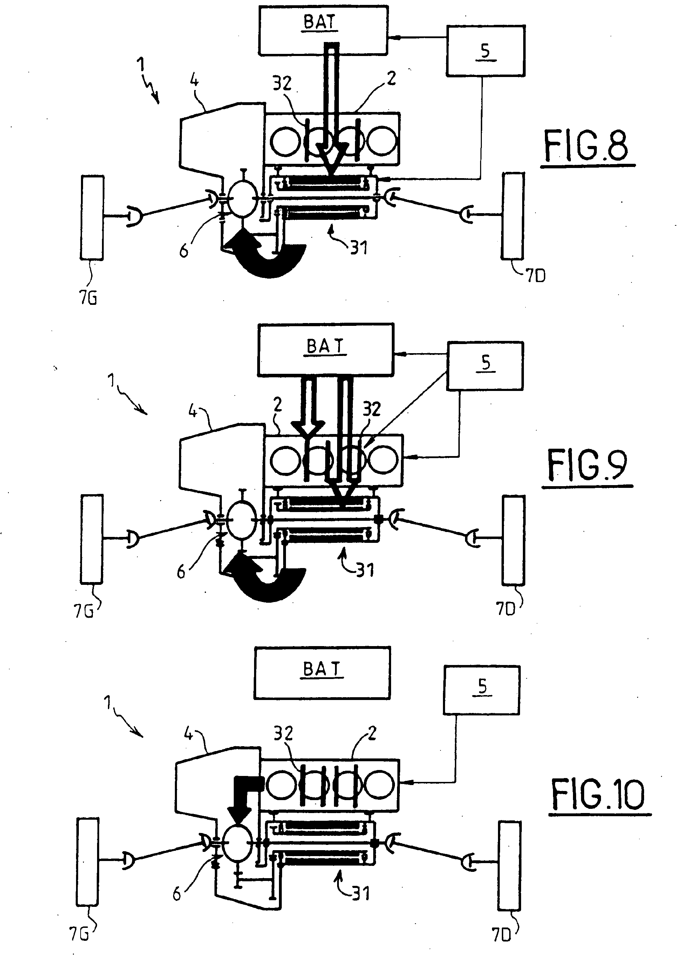

- les figures 8 à 10 illustrent respectivement des première, deuxième et troisième phases de fonctionnement, le véhicule étant en faible accélération ;
- la figure 11 illustre une phase de fonctionnement, le véhicule étant en forte accélération

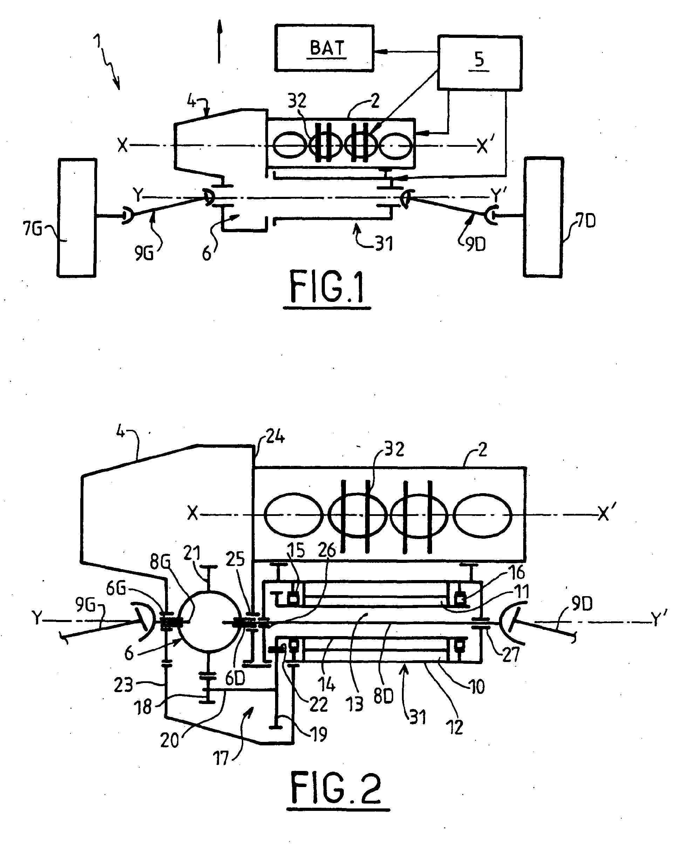

- les figures 1 2 et 13 illustrent respectivement des première et deuxième phases de fonctionnement, le véhicule étant en forte décélération.

Les éléments communs aux figures sont désignés par les mêmes références.

### DESCRIPTION DETAILLEE DE L'INVENTION

Les figures 1, 2 et 5 à 13 décrites ci-après présentent toutes une vue de dessus de l'avant d'un véhicule automobile 1, si on considère un véhicule à traction avant, ou de l'arrière du véhicule, si on considère un véhicule à traction arrière.

On considérera dans la suite de la description que ces différentes figures représentent l'avant du véhicule.

On a symbolisé par un premier type de flèche blanche, la puissance électrique et par un deuxième type de flèche noire, la puissance mécanique.

La figure 1 illustre schématiquement une implantation d'une chaîne de traction hybride selon l'invention sur laquelle sont représentés les principaux organes participant à la traction hybride d'un véhicule 1, à savoir :
- un moteur thermique 2 ;
- une première machine électrique 31 connectée aux roues 7G et 7D du véhicule 1 via leurs liaisons au sol respectives 9G et 9D ;
- au moins une deuxième machine électrique 32, ici quatre machines électriques intégrées au moteur thermique 2 dont au moins une est apte à se comporter comme un alterno-démarreur ;
- un organe de transmission 4 couplant le moteur thermique 2 et/ou les première et deuxième machines électriques 31 et/ou 32 aux roues tractées 7G, 7D du véhicule 1 ;
- une batterie BAT ; et
- un organe de gestion 5 de la chaîne de traction hybride apte à commander les différents organes introduits ci-dessus.

Selon cette implantation, la première machine électrique 31, est disposée à l'arrière du moteur thermique 2 et fixée contre ce dernier.

La direction de déplacement du véhicule 1 en marche avant est symbolisée par une flèche.

L'axe de rotation YY' de la première machine électrique 31 est parallèle à l'axe longitudinal XX' du moteur thermique 2. Les axes XX' et YY' passent respectivement par des plans parallèles entre eux. Ils peuvent également passer par des plans formant un angle entre eux.

L'organe de transmission 4 s'étend dans une direction perpendiculaire aux deux axes XX' et YY'. Il est disposé et fixé en bout du moteur thermique 2 et de la première machine électrique 31 ; le moteur thermique 2 et la première machine électrique 31 étant couplés respectivement l'un et/ou l'autre aux roues tractées 7G, 7D via l'organe de transmission 4.

L'organe de transmission 4 comporte, par exemple, une boîte de vitesses pilotée (BVMP) ou automatique voire, de préférence, une transmission continûment variable (CVT), non représentée. Il comporte en outre de manière classique, un réducteur de vitesse, non représenté, couplé au différentiel 6. En référence à la figure 2, décrivant un exemple de mode de réalisation d'une première machine électrique 31 couplée à l'organe de transmission 4 via un réducteur de vitesse à pignons 17, le différentiel 6 comporte une première et une deuxième sorties 6G et 6D couplées respectivement aux roues tractées 7G et 7D du véhicule 1 via respectivement deux arbres de transmission 8G et 8D et les moyens de liaison au sol 9G et 9D.

L'ensemble de pignonerie et autres composants mécaniques qui équipent classiquement une boîte de vitesses, ne sont pas représentés volontairement pour ne pas surcharger inutilement la figure.

La première machine électrique 31 comporte un stator 10 et un rotor 11 concentriques et creux qui sont tous deux logés à l'intérieur d'un corps 12 de forme générale cylindrique. Le corps 12 comporte un évidement central 13 s'étendant selon l'axe longitudinal YY' de la première machine électrique 31. Le stator 10 est fixé au corps 12 et le rotor 11 est disposé à l'intérieur du stator 10 et entoure l'évidement 13.

Le rotor 11 est solidaire d'un arbre creux 14 dont les deux extrémités libres dépassent du stator 11 et sont respectivement supportées et liées en rotation à des premier et deuxième paliers 15 et 16 fixés au corps 12 de la première machine électrique 31. L'arbre creux 14 délimite ainsi l'évidement 13 autour duquel est agencée la première machine électrique 31.

L'arbre de transmission 8D est monté centré et en rotation à l'intérieur de l'évidement 13 et débouche de part et d'autre du corps 12.

Une première extrémité de l'arbre de transmission 8D est couplée à une 7D des roues tractées 7G et 7D via la liaison au sol 9D et la deuxième extrémité est couplée à la première sortie 6D du différentiel 6.

Les stators 10, rotor 11, évidement 13 et arbre de roue 8D sont concentriques et de même axe correspondant à l'axe longitudinal YY' de la première machine électrique 31.

Dans l'exemple décrit, l'accouplement entre la première machine électrique 31 et le différentiel 6 est réalisé au moyen du réducteur de vitesse à pignons 17.

Le réducteur 17 est constitué d'un train d'engrenage comportant un premier et un deuxième pignon 18 et 19 de diamètres différents, lié en rotation et disposés respectivement à des première et deuxième extrémités d'un arbre secondaire 20. L'arbre 20 s'étend entre la couronne 21 du différentiel 6 et une roue dentée 22 fixée à l'arbre creux 14 du rotor 11, du côté du différentiel 6 ; les premier et deuxième pignons 18 et 19 engrenant respectivement avec la couronne 21 du différentiel 6 et la roue dentée 22.

Pour des questions de tolérance de montage et de facilité de montage, il pourra être avantageux de réaliser l'arbre secondaire 20 en deux segments liés entre eux en rotation

Ce train d'engrenage a pour but d'accoupler mécaniquement la couronne 21 du différentiel 6 au rotor 11 de la première machine électrique 31 avec un rapport de démultiplication fixé par le rapport des diamètres et le nombre de dents des pignons 18 et 19.

Dans ce mode de réalisation, le réducteur à pignons 17 est disposé à l'intérieur d'un carter 23 qui est rapporté et fixé sous l'organe de transmission 4 et partiellement sous le corps 12 de la première machine électrique 31. Le pignon de plus grand diamètre 19 ressort partiellement du carter 23 pour engrener avec la roue dentée 22 du rotor 11 à l'intérieur du corps 12 de la première machine électrique 31.

La couronne 21 du différentiel 6 ressort du carter 24 de l'organe de transmission 4 pour engrener avec le pignon de petit diamètre 29 à l'intérieur du carter 23 du réducteur 17.

La sortie 6D du différentiel 6 est maintenue et liée en rotation au carter 24 de l'organe de transmission 4 par l'intermédiaire d'un palier 25 solidaire du carter 24.

L'arbre de transmission 8D est maintenu et lié en rotation au corps 12 de la première machine électrique 31 par un premier palier 26 solidaire de la première extrémité du corps 12 et par un deuxième palier 27 solidaire de la deuxième extrémité du corps 12.

Dans ce mode de réalisation, la sortie 6D du différentiel 6 ne pénètre pas dans la première machine électrique 31 ; l'accouplement de la première machine électrique 31 avec le différentiel 6 se faisant via le réducteur à pignons 17.

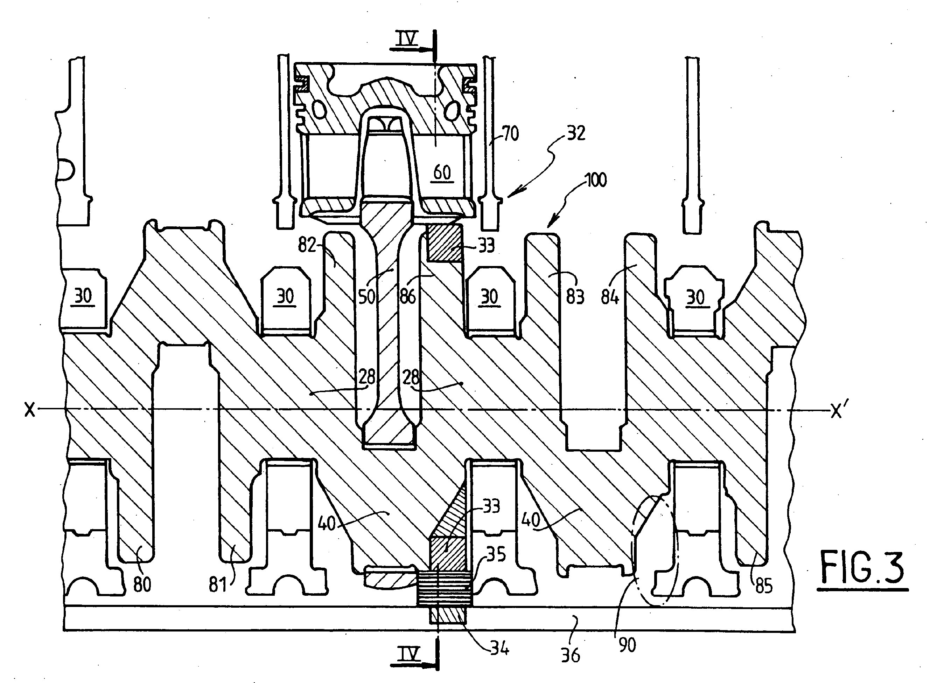

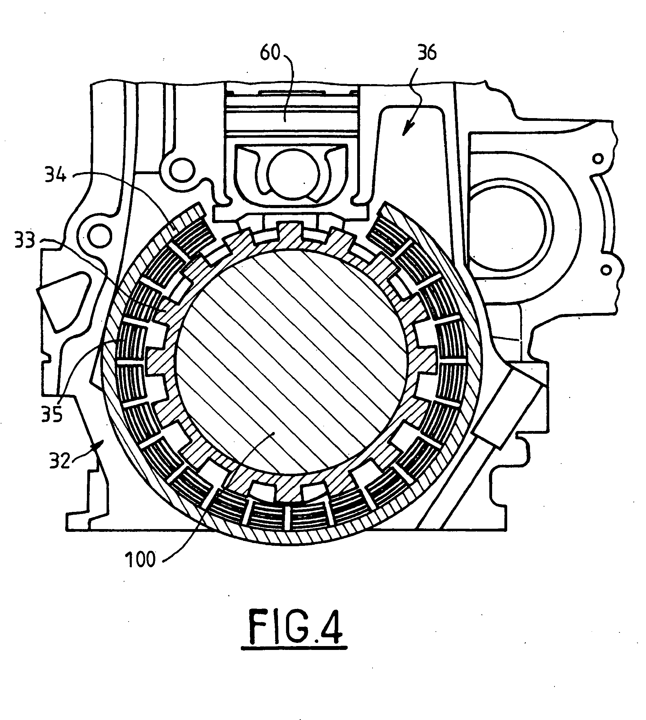

Un mode de réalisation de la deuxième machine électrique 32 et son couplage avec le moteur thermique 2 sont maintenant décrits en référence aux figures 3 et 4.

La référence 100 désigne le vilebrequin du moteur thermique 2 qui est partiellement représenté sur les figures.

Le vilebrequin 100 comporte un axe longitudinal confondu avec l'axe XX' du moteur thermique 2, autour duquel s'organisent de façon classique, des portions centrales 28 ou tourillons, maintenues par des paliers 30 supportant le vilebrequin 100 et des manetons 40, sur chacun desquels est articulée une bielle 50.

De façon connue, chaque bielle 50 est entraînée par un piston 60 qui se déplace dans une chemise 70. Pour des raisons de clarté, la chemise 70 n'est pas illustrée sur la figure 4.

Egalement pour des raisons de clarté, seule une bielle 50 et un piston 60 sont représentés à la figure 3. Bien sûr, le nombre de bielles 50 et de pistons 60 dépend du type de moteur considéré, comme d'ailleurs la forme du vilebrequin 100 lui-même.

Entre les portions centrales 28 et les manetons 40, le vilebrequin 100 comporte une série de bras 80 à 86.

Comme l'illustre la figure 3, le vilebrequin 100 présente au moins un bras, par exemple le bras 84 autour duquel un espace libre existe.

L'espace libre autour du bras 84 est ici désigné par la référence 90.

Il en est de même pour le bras 86, qui a été utilisé pour le montage de la deuxième machine électrique 32.

Cette deuxième machine électrique 32 comporte un rotor 33 qui est directement monté sur le bras 86 du vilebrequin 100.

La fixation du rotor 33 peut être réalisée par tout moyen approprié, notamment par collage, frettage ou assemblage mécanique.

Ce rotor 33 pourra être constitué soit d'aimants permanents, soit d'électroaimants qui seront alimentés par des pistes fixées dans le carter du moteur thermique, soit encore en un acier ferromagnétique passif.

La dimension du rotor 33 est bien entendu choisie pour s'adapter dans l'espace laissé libre autour du bras 86, en tenant compte de l'encombrement des autres pièces et notamment du piston 60.

A cet égard, on peut noter que le vilebrequin 100 peut également être conçu dès l'origine pour rendre plus aisé le montage d'un rotor 33 sur le bras 86, par exemple en donnant au bras une forme de révolution complète et/ou en l'évidant partiellement, dans les limites des contraintes de résistance imposées au vilebrequin 100 lui-même.

La deuxième machine 32 comporte également un stator 34 avec des bobines 35 ; ce stator 34 étant fixé dans le carter 36 du moteur thermique 2.

La forme du stator 34 sera bien entendu déterminée en fonction de la place disponible.

Il pourra ainsi être de révolution complète. Dans l'exemple illustré à la figure 4, le stator 34 est de révolution partielle, de façon à adapter la deuxième machine électrique 32 à l'espace occupé par le piston 60, quand celui-ci est dans son point mort bas.

Le stator 34 pourrait également être réalisé en plusieurs parties.

Comme illustré par les figures 3 et 4, la deuxième machine électrique 32 s'étend donc selon un plan sensiblement perpendiculaire à l'axe longitudinal XX' du vilebrequin 100.

Une seule deuxième machine électrique 32 est illustrée aux figures 3 et 4. Le nombre de deuxièmes machines électriques 32 montées sur le vilebrequin 100 sera adapté à la puissance requise pour le fonctionnement optimal du véhicule 1.

Le rotor 33 d'au moins une des deuxièmes machines électriques 32 étant lié en rotation avec le vilebrequin 100, elle peut assurer la recharge de la batterie BAT à laquelle elle est associée, lorsque le moteur thermique 2 tourne et qu'elle n'est pas utilisée pour générer du courant. Au moins une des deuxièmes machines électriques 32 peut également être utilisée pour récupérer de l'énergie pendant les phases de freinage du véhicule 1.

De façon connue, un moteur à combustion interne produit, en fonctionnement, d'importantes vibrations. Celles-ci sont dues au processus de combustion lui-même, et également au fonctionnement d'un moteur à pistons à mouvement alternatif.

Les moteurs à combustion interne les plus utilisés aujourd'hui sont des moteurs dits "à quatre temps" dans lesquels se produisent dans les différents cylindres des combustions du type explosion.

Celles-ci produisent des chocs importants sur les pistons et ces chocs sont transmis par l'intermédiaire des bielles et du vilebrequin, à l'ensemble de la ligne de transmission du véhicule.

Ces combustions du type explosion provoquent, en outre, d'importantes variations périodiques du couple moteur réel.

De plus, le changement de direction des pistons, aux points morts haut et bas, provoque des excitations à vibrations cinématiques, avec des fréquences fortement changeantes.

C'est pourquoi il est prévu en sortie du moteur thermique, un volant d'inertie, voire un double volant amortisseur, de façon à amortir les oscillations de torsion du vilebrequin et à ne les transmettre que de façon très atténuée à la boite de vitesses.

Ces volants amortisseurs sont d'un poids, d'un coût et d'un encombrement importants.

Dans une application avantageuse, au moins une des deuxième machines électriques 32 peut être commandée pour maîtriser les acyclismes du moteur thermique 2, notamment en réglant de façon appropriée le couple transmis par la au moins une des deuxièmes machines 32 au vilebrequin 100, pendant sa rotation.

Ce réglage peut conduire à faire tourner plus vite ou au contraire à ralentir le vilebrequin 100.

Ceci présente l'avantage de pouvoir réduire la taille ou simplifier la conception des volants amortisseurs placés en sortie du moteur thermique.

Enfin, au moins une des deuxièmes machines électriques 32 peut être utilisée pour connaître, à tout instant et de façon précise, la position et la vitesse du vilebrequin 100.

Ceci peut être obtenu simplement en munissant le rotor 33 de dents sur sa périphérie et en prévoyant une discontinuité dans la répartition des dents du rotor 33 sur sa périphérie.

On peut ainsi prévoir de supprimer une dent ou encore de remplacer une dent par deux dents de taille plus petite ou espacées l'une de l'autre.

A l'aide de capteurs, qui détectent cette discontinuité, la position du vilebrequin 100 peut être connue de façon précise.

Au moins une des bobines 35 du stator 34 d'au moins une des deuxièmes machines électriques 32 peut être utilisée comme capteur pour suivre cette discontinuité. On rappelle que la connaissance de la position et de la vitesse du vilebrequin 100 peut notamment être utile pour régler de façon appropriée l'ouverture des soupapes, l'injection du carburant ou l'allumage.

Ce mode de réalisation particulier permet d'éviter l'utilisation d'une roue dentée spécifique qui est habituellement prévue et d'un capteur spécifique.

Ceci permet également de libérer de l'espace à l'intérieur du carter du moteur thermique et de réduire les coûts de fabrication.

Il convient de souligner que l'invention a été décrite en référence à un exemple de vilebrequin. Bien entendu, l'invention n'est pas limitée à ce mode de réalisation et peut être mise en oeuvre avec tout type de vilebrequin conçu pour un moteur thermique donné.

On va maintenant décrire en détail les différentes étapes du procédé de gestion d'une chaîne de traction hybride selon l'invention, mis en oeuvre par l'organe de gestion 5, en fonction des différentes conditions de roulage d'un véhicule automobile 1. Cette description est faite en référence aux figures 5 à 13 et s'appuie sur les différents organes décrits ci-dessus.

Quand le véhicule 1 est à l'arrêt (fig. 5) et si le niveau de charge de la batterie BAT est insuffisant pour faire démarrer le véhicule ou si la température du moteur thermique 2 est trop basse, c'est-à-dire en dessous d'une température pour laquelle le véhicule ne répondrait pas aux critères de dépollution et de confort habitacle, l'organe de gestion 5 utilise le moteur thermique pour soit recharger la batterie BAT soit pour atteindre la température voulue via au moins une des deuxièmes machines électriques 32 intégrées sur le vilebrequin 100. De préférence, la transmission sera sur un rapport de vitesse engagé afin de pouvoir répondre instantanément à une volonté de déplacement du véhicule 1.

Par batterie, on entendra toute source d'alimentation électrique, autonome, embarquée à bord du véhicule 1 comportant par exemple une ou plusieurs batteries ou blocs/packs batteries qui sont en outre aptes à être rechargées et déchargées pour servir respectivement à la fois et de réservoir et de générateur d'énergie électrique.

Quand le véhicule 1 est en vitesse stabilisée (fig. 6 et 7) et à faible vitesse, par exemple de l'ordre de 20 Km/h, le besoin de puissance à la roue est faible : puissance inférieure à environ 10 KW. Il n'est donc pas intéressant d'utiliser le moteur thermique 2 du fait de son très mauvais rendement pour ce niveau de puissance.

L'organe de gestion 5 commande alors la chaîne de traction de la manière suivante :
L'organe de gestion 5 commande la première machine électrique 31, connectée aux roues 7G, 7D, pour, via l'organe de transmission 4, mettre le véhicule 1 en roulage en mode électrique pur (fig. 6) jusqu'à obtention d'un niveau minimal déterminé de charge de la batterie BAT puis l'organe de gestion 5 commande le démarrage du moteur thermique 2 qui est utilisé à la fois pour faire avancer le véhicule 1 et pour recharger la batterie BAT (fig. 7). A titre d'exemple, en vitesse stabilisée à 20 Km/h, il faut une puissance de l'ordre de 1,5 KW pour faire avancer le véhicule 1. La puissance fournie par le moteur thermique 2 lorsqu'il fonctionne avec un bon rendement (ou rendement optimal) est alors de l'ordre de 7 KW. Dans cet exemple, 5,5 KW sont donc destinés pour la recharge de la batterie BAT. Le temps de fonctionnement du moteur thermique 2 est alors très court. Il est par exemple de l'ordre de 20 % du temps total de sollicitation du moteur thermique sachant qu'à vitesse stabilisée le fonctionnement du moteur thermique est intermittent ; le ratio temps d'arrêt sur temps de marche étant fonction de la puissance demandée à la roue.

Toujours en vitesse stabilisée mais à une vitesse de 60 Km/h, la puissance nécessaire pour faire avancer le véhicule 1 est alors de l'ordre de 6,3 KW et la puissance fournie par le moteur thermique 2 lorsqu'il fonctionne, est de l'ordre de 7 KW. Ainsi, seulement 0,7 KW sont destinés pour la recharge de la batterie BAT. Le temps de fonctionnement du moteur thermique 2 est alors très long. Il est par exemple de l'ordre de 80% du temps total de sollicitation du moteur thermique.

Le cumul des puissances nécessaires pour faire avancer le véhicule 1 et pour recharger la batterie BAT permet alors d'amener le moteur thermique 2 dans une zone de fonctionnement de meilleur rendement.

Lorsque la vitesse augmente au-delà d'une vitesse déterminée correspondant à un niveau de puissance permettant au moteur thermique d'avoir un bon rendement, l'organe de gestion 5 désactive la première machine électrique 31. L'organe de gestion 5 n'utilise donc plus la traction électrique mais uniquement la traction thermique car le moteur thermique 2 atteint alors son rendement optimal de fonctionnement.

Avantageusement, on utilise une CVT (Transmission Continûment Variable) qui permet d'adapter au mieux le régime moteur par rapport à la vitesse du véhicule 1.

Avantageusement encore, l'organe de gestion 5 peut commander la recharge de la batterie BAT par l'une ou l'autre des première 31 et au moins une des deuxièmes machines électriques 32.

Quand le véhicule 1 est en faible accélération (fig. 8 à 10), et en fonction du niveau de charge de la batterie BAT et du niveau de puissance demandé à la roue, l'organe de gestion 5 commande la chaîne de traction pour effectuer le "décollage" (passage d'une vitesse nulle à une vitesse non nulle du véhicule) en mode traction électrique pur puis à partir d'un instant déterminé, fixé par une stratégie de pilotage déterminée de la chaîne de traction, l'organe de gestion 5 commande la chaîne pour démarrer le moteur thermique 2 qui assure, alors, à lui seul, la traction du véhicule 1.

On décompose cette dernière étape selon trois phases :
- une première phase (fig. 8) de traction électrique pure, dans laquelle l'organe de gestion 5 commande seulement l'alimentation de la première machine électrique 31 connectée aux roues 7G et 7D, par la batterie BAT ; la première machine électrique 31 assurant seule l'avancement du véhicule 1 ;
- une deuxième phase (fig. 9), toujours de traction électrique pure, dans laquelle la première machine électrique 31 assure toujours l'avancement du véhicule 1, et dans laquelle l'organe de gestion 5 commande en outre l'alimentation de la deuxième machine électrique 32 par la batterie BAT pour le démarrage du moteur thermique 2 ; et
- une troisième phase (fig. 10) de traction thermique pure, dans laquelle l'organe de gestion 5 commande le moteur thermique 2 pour qu'il prenne le relais de la première machine électrique 31 ; le moteur thermique 2 assurant alors à lui seul la traction du véhicule 1 via l'organe de transmission 4. Dans ce cas, l'organe de gestion 5 pourra commander avantageusement la chaîne de traction pour que le moteur thermique 2 recharge la batterie BAT.

Quand le véhicule 1 est en forte accélération (fig. 11) et après une phase très courte, identique à celle de la faible accélération décrite ci-dessus, l'organe de gestion 5 commande la chaîne de traction pour consacrer toute les sources de puissance disponibles à l'accélération du véhicule 1.

Ainsi, dans ce dernier mode de fonctionnement, le potentiel de puissance disponible résulte de la somme de la puissance délivrée par le moteur thermique 2 et des puissances délivrées respectivement par les première et deuxième machines électriques 31 et 32, à la limitation prés de la puissance maximale de la batterie BAT.

Si l'accélération est "intermédiaire", c'est-à-dire, entre une faible accélération et_une forte accélération, l'organe de gestion 5 commande seulement une ou l'autre des première et deuxième machines 31 ou 32.

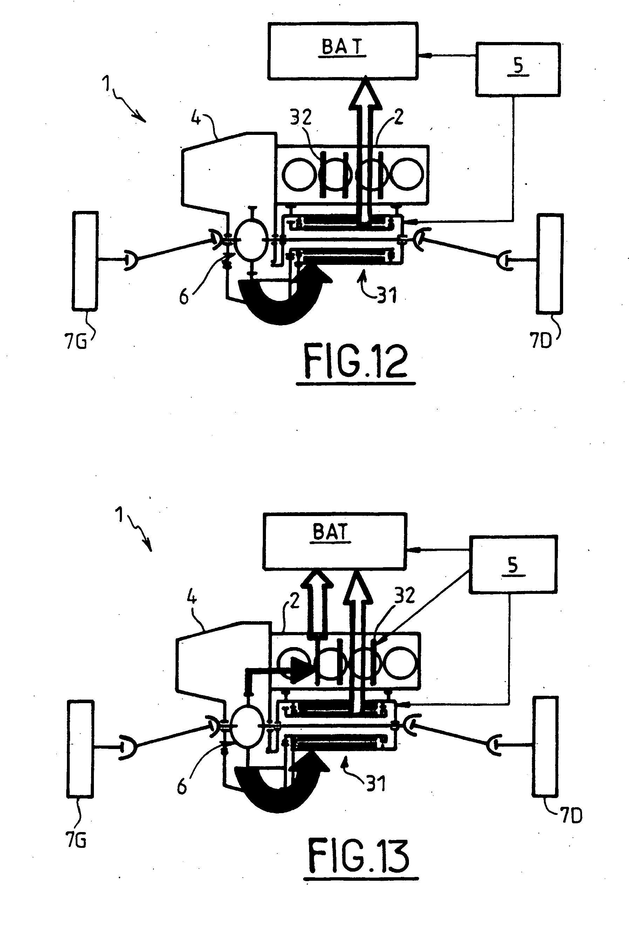

Quand le véhicule 1 est en décélération ou freinage (fig. 12 et 13), l'organe de gestion 5 commande soit la première machine électrique 31 soit la première et au moins une des deuxièmes machines électriques 31 et 32 en fonction de l'amplitude de la décélération ou du freinage demandé et des puissances maximales disponibles des première et deuxième machines électriques.

Ainsi, par exemple, pour une faible décélération (fig. 12), l'organe de gestion 5 commande uniquement la première machine électrique 31, connectée aux roues 7G et 7D, de manière à assurer un freinage direct des roues 7G et 7D, à concurrence de la puissance maximale disponible de la première machine électrique 31.

Dans un autre exemple, et pour une forte décélération (fig. 13), l'organe de gestion 5 commande, en outre, au moins une des deuxième machines électriques 32 intégrées au vilebrequin 100, de manière à participer au freinage via l'organe de transmission 4. Le choix d'une transmission continûment variable (CVT) est dans ce cas nécessaire pour éviter les ruptures de couple.

L'électronique de puissance nécessaire au fonctionnement des machines électriques 31 et 32 n'est pas illustrée sur les figures. Elle est par exemple fixée directement sur le moteur thermique 2, dans le carter du moteur 2 ou à un endroit quelconque du compartiment moteur.

Le nombre de deuxièmes machines électriques 32 intégrées au vilebrequin 100 ainsi que le dimensionnement et les caractéristiques électriques des première et deuxième machines électriques 31 et 32, sont adaptés à la puissance requise par le véhicule 1.

L'invention présente l'avantage de satisfaire complètement au cahier des charges d'une chaîne de traction hybride dans les différents modes de roulage du véhicule 1.

Enfin, avantageusement, dans le cas de l'utilisation d'une boite de vitesses de type boîtes de vitesses manuelle pilotée BVMP, la première machine électrique 31 connectée aux roues 7G et 7D, est utilisée pendant les phases de changement de rapport afin de réduire la rupture de couple à la roue.

D'autre part, le choix spécifique des première et deuxième machines électriques, 32 et 32, et de leur implantation telle que décrite dans la présente demande, permet de réaliser les fonctions sans pénaliser l'encombrement du groupe motopropulseur GMP.

Avantageusement encore, toute la puissance électrique nécessaire pour assurer le fonctionnement hybride optimal de la chaîne de traction est fournie en limitant le nombre de sources d'énergie électrique : batterie, et machines électriques.

Enfin, l'utilisation d'une transmission de type CVT permet d'assurer au mieux le choix continu du point de fonctionnement du moteur thermique.

La présente invention n'est bien sûr pas limitée aux modes de réalisation décrits et peut englober toutes variantes entrant dans le champ des revendications.

L'enchaînement des différentes étapes qui viennent d'être décrites suit une stratégie de condition de roulage particulière qui n'est pas exclusive. D'autres enchaînements correspondant à d'autres conditions de roulage peuvent être également envisagées sans pour autant sortir du cadre de l'invention.

## Revendications

1. Chaîne de traction hybride d'un véhicule (1) comportant :
- un moteur thermique (2) doté d'un vilebrequin (100) dont les bras (80 à 86) s'étendent sensiblement perpendiculairement à son axe longitudinal (XX') ;
- un organe de transmission (4) disposé entre la sortie du vilebrequin (100) et les roues tractées (7G, 7D) du véhicule (1), le vilebrequin (100) étant couplé aux roues (7G, 7D) via l'organe de transmission (4) ;
- au moins une première machine électrique (31) et au moins une deuxième machine électrique (32) comportant chacune un stator et un rotor, la première machine électrique (31) étant apte à coopérer avec l'organe de transmission (4) et la deuxième machine électrique (32) étant apte à coopérer avec le moteur thermique pour fournir séparément ou conjointement une traction thermique et/ou électrique aux roues tractées (7G, 7D);
- une batterie (BAT) couplée aux première et deuxième machines électriques (31, 32) ; et
- un organe de gestion (5) apte à commander la charge ou la décharge de la batterie (BAT), le moteur thermique (2) et les première et deuxième machines électriques (31, 32),
**caractérisée en ce que** la première machine électrique (31) est logée à l'intérieur d'un corps creux (12) distinct de l'ensemble mécanique (4) et disposée entre l'organe de transmission (4) et une (7D) des roues tractées (7G, 7D), en entourant l'arbre de transmission (8D) reliant la roue tractée (7D) à l'organe de transmission (4), et **en ce que** la deuxième machine électrique (32) est disposée à l'intérieur du moteur thermique (2), le rotor (33) de la deuxième machine électrique (32) étant fixé sur un bras (86) du vilebrequin (100) et son stator (34) étant fixé dans le carter (36) du moteur thermique (2).

2. Chaîne de traction hybride selon la revendication 1, **caractérisée en ce qu'**au moins une deuxième machine électrique (32) est un démarreur ou un alternateur ou un alterno-démarreur.

3. Procédé de gestion d'une chaîne de traction hybride selon l'une quelconque des revendications 1 et 2, **caractérisé en ce qu'**il consiste à commander le moteur thermique (2), la première machine électrique (31), la au moins deuxième machine électrique (32) et la batterie (BAT) pour adapter leur fonctionnement en fonction des conditions de roulage du véhicule (1).

4. Procédé selon la revendication 3, **caractérisé en ce**, le véhicule (1) étant à l'arrêt, et si le niveau de charge de la batterie (BAT) est inférieur à un niveau de charge déterminé ou si le régime du moteur thermique (2) est inférieur à un régime déterminé, il consiste à commander le moteur thermique (2) pour recharger la batterie (BAT) via la au moins deuxième machine électrique (32).

5. Procédé selon la revendication 3, **caractérisé en ce que**, le véhicule (1) étant en vitesse stabilisée et si la vitesse est inférieure à une vitesse déterminée, il consiste à commander la première machine électrique (31) pour mettre le véhicule (1) en roulage via l'organe de transmission (4) jusqu'à obtention d'un niveau minimal déterminé de charge de la batterie (BAT) puis, le niveau de charge minimal étant atteint, il consiste à commander le moteur thermique (2) qui est utilisé à la fois pour faire avancer le véhicule (1) et pour recharger la batterie (BAT), et **en ce qu'**il consiste, si la vitesse augmente au-dessus d'une vitesse déterminée, à désactiver la première machine électrique (31) pour ne conserver que la traction thermique pure seulement due au moteur thermique (2).

6. Procédé selon la revendication 3, **caractérisé en ce que**, le véhicule (1) étant en accélération inférieure à un seuil déterminé et pour un niveau de charge de la batterie (BAT) déterminé et à un niveau de puissance demandé à la roue déterminé, il consiste :
- dans une première phase de traction électrique pure, à commander seulement l'alimentation de la première machine électrique (31) par la batterie (BAT) ; la première machine (31) assurant seule l'avancement du véhicule (1) ;
- dans une deuxième phase, toujours de traction électrique pure, dans laquelle la première machine électrique (31) assure toujours l'avancement du véhicule (1), à commander en outre l'alimentation de la au moins deuxième machine électrique (32) par la batterie (BAT) pour le démarrage du moteur thermique (2) ; et
- dans une troisième phase de traction thermique pure, à commander le moteur thermique (2) pour qu'il prenne le relais de la première machine électrique (31) ; le moteur thermique (2) assurant alors à lui seul la traction du véhicule (1) via l'organe de transmission (4).

7. Procédé selon la revendication 6, **caractérisé en ce** dans la troisième phase de traction thermique pure, il consiste en outre à commander le moteur thermique (2) pour recharger la batterie (BAT).

8. Procédé selon la revendication 3, **caractérisé en ce que**, le véhicule (1) étant en accélération supérieure à un seuil déterminé, il consiste à commander conjointement, le moteur thermique (2), les première et la au moins deuxième machines électriques (31 et 32) et la batterie (BAT) pour consacrer toute la puissance disponible à l'accélération du véhicule (1).

9. Procédé selon la revendication 3, **caractérisé en ce que**, le véhicule (1) étant en accélération intermédiaire, c'est-à-dire une accélération comprise entre une accélération inférieure à premier un seuil déterminé et une accélération supérieure à un deuxième seuil déterminé, il consiste à commander seulement une ou l'autre des première et la au moins deuxièmes machines électriques (31 ou 32).

10. Procédé selon la revendication 3, **caractérisé en ce**, le véhicule (1) étant en décélération inférieure à un seuil déterminée, il consiste à commander uniquement la première machine électrique (31) de manière à assurer un freinage récupératif.

11. Procédé de commande selon la revendication 3, **caractérisé en ce**, le véhicule étant en décélération supérieure à un seuil déterminé et l'organe de transmission (4) comportant une transmission continûment variable, il consiste à commander la première machine électrique (31) connectée aux roues (7G, 7D) et la au moins deuxième machine électrique (32) intégrée au vilebrequin (100), de manière à participer au freinage des roues (7G, 7D), avec la première machine électrique (31), via l'organe de transmission (4).

12. Procédé selon l'une quelconque des revendications 3 à 10, **caractérisé en ce que**, l'organe de transmission (4) comportant une boite de vitesses manuelle pilotée, il consiste à commander la première machine électrique (31) connectée aux roues (7G, 7D) pour prendre le relais du moteur thermique (2) pendant les phases de changement de rapport afin de réduire la rupture de couple à la roue.

13. Véhicule équipé d'une chaîne de traction hybride conforme aux revendications 1 et 2 et mettant en oeuvre le procédé de gestion selon l'une quelconque des revendication 3 à 12.

## Claims

1. Hybrid drive chain of a vehicle (1) comprising:
- a heat engine (2) equipped with a crankshaft (100), the arms (80 to 86) of which extend substantially perpendicularly to its longitudinal axis (XX');
- a transmission member (4) disposed between the output of the crankshaft (100) and the driven wheels (7G, 7D) of the vehicle (1), the crankshaft (100) being coupled to the wheels (7G, 7D) via the transmission member (4);
- at least one first electrical machine (31) and at least one second electrical machine (32), each comprising a stator and a rotor, the first electrical machine (31) being able to cooperate with the transmission member (4) and the second electrical machine (32) being able to cooperate with the heat engine in order to provide a thermal and/or electrical traction separately or jointly to the driven wheels (7G, 7D);
- a battery (BAT) coupled to the first and second electrical machines (31, 32); and
- a management member (5) capable of controlling the charge or discharge of the battery (BAT), the heat engine (2) and the first and second electrical machines (31, 32),
**characterized in that** the first electrical machine (31) is housed inside a hollow body (12) separate from the mechanical assembly (4) and disposed between the transmission member (4) and one (7D) of the driven wheels (7G, 7D), surrounding the transmission shaft (8D) connecting the driven wheel (7D) to the transmission member (4), and **in that** the second electrical machine (32) is disposed inside the heat engine (2), the rotor (33) of the second electrical machine (32) being fixed on an arm (86) of the crankshaft (100) and its stator (34) being fixed in the case (36) of the heat engine (2).

2. Hybrid drive chain according to Claim 1, **characterized in that** at least one second electrical machine (32) is a starter or an alternator or an alternator-starter.

3. Method for managing a hybrid drive chain according to any one of Claims 1 and 2, **characterized in that** it consists in controlling the heat engine (2), the first electrical machine (31), the at least second electrical machine (32) and the battery (BAT) to adapt their operation as a function of the driving conditions of the vehicle (1).

4. Method according to Claim 3, **characterized in that**, when the vehicle (1) is at a stop, if the charge level of the battery (BAT) is lower than a set charge level or if the speed of the heat engine (2) is lower than a set speed, it consists in commanding the heat engine (2) to recharge the battery (BAT) via the at least second electrical machine (32).

5. Method according to Claim 3, **characterized in that**, with the vehicle (1) being at a stabilized speed and if the speed is lower than a set speed, it consists in commanding the first electrical machine (31) to set the vehicle (1) in motion via the transmission member (4) until a set minimum charge level of the battery (BAT) is obtained, then, when the minimum charge level has been reached, it consists in commanding the heat engine (2), which is used both to move the vehicle (1) forward and to recharge the battery (BAT), and **in that** it consists, if the speed increases above a set speed, in deactivating the first electrical machine (31) to retain only the pure thermal traction due solely to the heat engine (2).

6. Method according to Claim 3, **characterized in that** when the vehicle (1) is accelerating at a rate less than a set threshold and for a set charge level of the battery (BAT) and at a set power level requested at the wheel, it consists:
- in a first pure electrical traction phase, in commanding only the supply of the first electrical machine (31) by the battery (BAT); with the first machine (31) ensuring only the forward movement of the vehicle (1);
- in a second phase, still a pure electrical traction phase, in which the first electrical machine (31) still ensures the forward movement of the vehicle (1), in additionally commanding the supply of the at least second electrical machine (32) by the battery (BAT) for the starting of the heat engine (2); and
- in a third pure thermal traction phase, in commanding the heat engine (2) so that it takes over from the first electrical machine (31); with the heat engine (2) then ensuring by itself the traction of the vehicle (1) via the transmission member (4).

7. Method according to Claim 6, **characterized in that** in the third pure thermal traction phase, it additionally consists in commanding the heat engine (2) to recharge the battery (BAT).

8. Method according to Claim 3, **characterized in that**, when the vehicle (1) is accelerating at a rate higher than a set threshold, it consists in jointly commanding the heat engine (2), the first and the at least second electrical machines (31 and 32) and the battery (BAT) to devote all the available power to the acceleration of the vehicle (1).

9. Method according to Claim 3, **characterized in that**, when the vehicle (1) is accelerating at an intermediate rate, i.e. an acceleration comprised between an acceleration lower than first a set threshold and an acceleration higher than a second set threshold, it consists in commanding only one or other of the first and the at least second electrical machines (31 or 32).

10. Method according to Claim 3, **characterized in that**, when the vehicle (1) is decelerating at a rate lower than a set threshold, it consists in commanding only the first electrical machine (31) so as to ensure a recuperative braking.

11. Command method according to Claim 3, **characterized in that**, when the vehicle is decelerating at a rate higher than a set threshold and the transmission member (4) comprises a continuously variable transmission, it consists in commanding the first electrical machine (31) connected to the wheels (7G, 7D) and the at least second electrical machine (32) integrated to the crankshaft (100), so as to contribute to the braking of the wheels (7G, 7D), with the first electrical machine (31), via the transmission member (4).

12. Method according to any one of Claims 3 to 10, **characterized in that**, with the transmission member (4) comprising a controlled manual gearbox, it consists in commanding the first electrical machine (31) connected to the wheels (7G, 7D) to take over from the heat engine (2) during the gear ratio change phases in order to reduce the discontinuity in torque to the wheel.

13. Vehicle equipped with a hybrid drive chain according to Claims 1 and 2 and implementing the management method according to any one of Claims 3 to 12.

## Patentansprüche

1. Hybrider Traktionsantrieb eines Fahrzeugs (1), Folgendes aufweisend:
- einen Verbrennungsmotor (2), der mit einer Kurbelwelle (100) versehen ist, deren Arme (80 bis 86) sich im Wesentlichen senkrecht zu ihrer Längsachse (XX') erstrecken;
- ein Übertragungsorgan (4), das zwischen dem Ausgang der Kurbelwelle (100) und den gezogenen Rädern (7G, 7D) des Fahrzeugs (1) angeordnet ist, wobei die Kurbelwelle (100) mit den Rädern (7G, 7D) über das Übertragungsorgan (4) gekoppelt ist;
- mindestens eine erste Elektromaschine (31) und mindestens eine zweite Elektromaschine (32), die jeweils einen Stator und einen Rotor aufweisen, wobei die erste Elektromaschine (31) mit dem Übertragungsorgan (4) und die zwei Elektromaschine (32) mit dem Verbrennungsmotor zusammenarbeiten kann, um getrennt oder gemeinsam eine Wärmetraktion und/oder elektrische Traktion an die gezogenen Rädern (7G, 7D) zu liefern;
- eine Batterie (BAT), die mit der ersten und mit der zweiten Elektromaschine (31, 32) gekoppelt ist; und
- ein Verwaltungsorgan (5), das das Laden oder Entladen der Batterie (BAT), den Verbrennungsmotor (2) und die erste und die zwei Elektromaschine (31, 32) steuern kann,
**dadurch gekennzeichnet, dass** die erste Elektromaschine (31) im Inneren eines Hohlkörpers (12), der von der mechanischen Einheit (4) getrennt und zwischen dem Übertragungsorgan (4) und einem (7D) der gezogenen Räder (7G, 7D) angeordnet ist, untergebracht ist, wobei die Übertragungswelle (8D), die das gezogene Rad (7D) mit dem Übertragungsorgan (4) verbindet, umgeben wird, und dass die zweite Elektromaschine (32) im Inneren des Verbrennungsmotors (2) angeordnet ist, wobei der Rotor (33) der zweiten Elektromaschine (32) an einem Arm (86) der Kurbelwelle (100) befestigt ist und wobei sein Stator (34) in dem Gehäuse (36) des Verbrennungsmotors (2) befestigt ist.

2. Hybrider Traktionsantrieb nach Anspruch 1, **dadurch gekennzeichnet, dass** mindestens eine zweite Elektromaschine (32) ein Stator oder ein Wechselstromgenerator oder Starter-Generator ist.

3. Verfahren zum Verwalten eines hybriden Traktionsantriebs nach einem der Ansprüche 1 und 2, **dadurch gekennzeichnet, dass** es darin besteht, den Verbrennungsmotor (2), die erste Elektromaschine (31), die mindestens zweite Elektromaschine (32) und die Batterie (BAT) zu steuern, um ihren Betrieb in Abhängigkeit von den Fahrbedingungen des Fahrzeugs (1) anzupassen.

4. Verfahren nach Anspruch 3, **dadurch gekennzeichnet, dass** es, während sich das Fahrzeug (1) im Stillstand befindet und wenn das Ladeniveau der Batterie (BAT) niedriger ist als ein bestimmtes Ladeniveau, oder wenn die Drehzahl des Verbrennungsmotors (2) niedriger ist als eine bestimmte Drehzahl, darin besteht, den Verbrennungsmotor (2) zu steuern, um die Batterie (BAT) über die mindestens zweite Elektromaschine (32) aufzuladen.

5. Verfahren nach Anspruch 3, **dadurch gekennzeichnet, dass** es, wenn das Fahrzeug (1) eine stabilisierte Drehzahl hat und wenn die Drehzahl niedriger ist als eine vorbestimmte Drehzahl, darin besteht, die erste Elektromaschine (31) zu steuern, um das Fahrzeug (1) über das Übertragungsorgan (4) zum fahren zu bringen, bis ein bestimmtes Mindestladeniveau der Batterie (BAT) erzielt wird und es dann, wenn das Mindestladeniveau erreicht ist, darin besteht, den Verbrennungsmotor (2), der sowohl zum Fahren des Fahrzeugs (1) als auch zum Aufladen der Batterie (BAT) benutzt wird, zu steuern, und dass es darin besteht, wenn die Drehzahl über eine bestimmte Drehzahl hinaus steigt, die erste Elektromaschine (31) zu deaktivieren, um nur allein die thermische Traktion durch den Verbrennungsmotor (2) zu behalten.

6. Verfahren nach Anspruch 3, **dadurch gekennzeichnet, dass** es, während sich das Fahrzeug (1) in Beschleunigung unterhalb eines bestimmten Schwellenwerts und für ein bestimmtes Ladeniveau der Batterie (BAT) und auf einem geforderten Leistungsniveau an dem bestimmten Rad befindet, aus Folgendem besteht:
- in einer ersten Phase der reinen elektrischen Traktion nur die Versorgung der ersten Elektromaschine (31) durch die Batterie (BAT) zu steuern; wobei die erste Elektromaschine (31) allein das Fahren des Fahrzeugs (1) sicherstellt;
- in einer zweiten Phase, immer noch mit reiner elektrischer Traktion, in der die erste Elektromaschine (31) immer noch das Fahren des Fahrzeugs (1) sicherstellt, außerdem die Versorgung der mindestens zweiten Elektromaschine (32) durch die Batterie (BAT) für das Starten des Verbrennungsmotors (2) zu steuern; und
- in einer dritten Phase der reinen thermischen Traktion den Verbrennungsmotor (2) zu steuern, so dass er für die erste Elektromaschine (31) übernimmt; wobei der Verbrennungsmotor (2) daher allein die Traktion des Fahrzeugs (1) über das Übertragungsorgan (4) sicherstellt.

7. Verfahren nach Anspruch 6, **dadurch gekennzeichnet, dass** es in der dritten Phase der reinen thermischen Traktion darin besteht, außerdem den Verbrennungsmotor (2) zu steuern, um die Batterie (BAT) aufzuladen.

8. Verfahren nach Anspruch 3, **dadurch gekennzeichnet, dass** es, während sich das Fahrzeug (1) in Beschleunigung größer als ein bestimmter Schwellenwert befindet, darin besteht, den Verbrennungsmotor (2), die erste und die mindestens zweite Elektromaschine (31 und 32) sowie die Batterie (BAT) zu steuern, um ihre ganze verfügbare Leistung der Beschleunigung des Fahrzeugs (1) zu widmen.

9. Verfahren nach Anspruch 3, **dadurch gekennzeichnet, dass** es, während sich das Fahrzeug (1) in der Zwischenbeschleunigung befindet, das heißt in einer Beschleunigung zwischen einer Beschleunigung unter einem ersten bestimmten Schwellenwert und einer Beschleunigung oberhalb eines zweiten bestimmten Schwellenwerts, darin besteht, nur die eine oder die andere der ersten und mindestens zweiten Elektromaschine (31 oder 32) zu steuern.

10. Verfahren nach Anspruch 3, **dadurch gekennzeichnet, dass** es, während sich das Fahrzeug (1) in einer Verlangsamung, die niedriger ist als ein bestimmter Schwellenwert, befindet, darin besteht, nur die erste Elektromaschine (31) derart zu steuern, dass ein rückgewinnendes Bremsen sichergestellt ist.

11. Steuerverfahren nach Anspruch 3, **dadurch gekennzeichnet, dass** es, während sich das Fahrzeug in Verlangsamung befindet, die größer ist als ein bestimmter Schwellenwert, und wobei das Übertragungsorgan (4) eine stufenlos variable Übertragung aufweist, darin besteht, die erste Elektromaschine (31), die an die Räder (7G, 7D) angeschlossen ist, und die mindestens zweite Elektromaschine (32) die in der Kurbelwelle (100) integriert ist, zu steuern, so dass mit der ersten Elektromaschine (31) über das Übertragungsorgan (4) am Bremsen der Räder (7G, 7D) teilgenommen wird.

12. Verfahren nach einem der Ansprüche 3 bis 10, **dadurch gekennzeichnet, dass** es, wobei das Übertragungsorgan (4) ein manuelles gesteuertes Schaltgetriebe aufweist, darin besteht, die erste Elektromaschine (31), die an die Räder (7G, 7D) angeschlossen ist, zu steuern, um für den Verbrennungsmotor (2) während der Gangwechselphasen zu übernehmen, um die Drehmomentunterbrechung an dem Rad zu verringern.

13. Fahrzeug, das mit einem hybriden Traktionsantrieb gemäß den Ansprüchen 1 und 2 ausgerüstet ist und das Verwaltungsverfahren nach einem der Ansprüche 3 bis 12 umsetzt.
